# EUROPEAN PATENT APPLICATION

(11) **EP 4 467 515 A1**
(43) Date of publication of application: **27.11.2024**
(21) Application number: 23382488.7
(22) Date of filing: 25.05.2023
(51) Int. Cl.: C01B 3/02, H02J 3/38, H02J 15/00

(54) **HYDROGEN PRODUCTION SYSTEM AND METHOD THEREOF**

(71) Applicant: H2PLT, S.A., 25003 lleida (ES)
(72) Inventor: SAPENA SOLER, FRANCISCO, 25003 LLEIDA (ES)

(57) **Abstract**

The object of the invention hereby disclosed relates to the consumer products field, and more specifically to a low-carbon emitting method of delivering on-demand power to the consumer. The invention further relates to the use and production of hydrogen as a fuel for fuel cells, for combustion as an auxiliary energy source, and for power generation as part of a power distribution system where hydrogen is converted to electricity. Said hydrogen may be used to feed the system or can be used to power an electric vehicle. The object of the invention provides green hydrogen for domestic use.

## Description

### OBJECT OF THE INVENTION

The present invention is directed to the generation and distribution of energy.

The object of the invention hereby disclosed relates to the consumer products field, and more specifically to a low-carbon emitting method of delivering on-demand power to the consumer.

The invention further relates to the use and distribution of hydrogen as a fuel for fuel cells, for combustion as an auxiliary energy source, and for power generation as part of a power distribution system where hydrogen is converted to electrical energy.

### BACKGROUND OF THE INVENTION

Hydrogen can be generated from renewable sources such as water and biomass through processes called electrolysis and biomass gasification. Electrolysis uses an electrical current to split water into hydrogen and oxygen, while biomass gasification converts organic matter into a mixture of hydrogen and carbon monoxide, which is then known as "syngas." Both methods are considered clean and sustainable because they do not produce greenhouse gas emissions. Additionally, hydrogen generated from these sources can be used in various applications, such as fuel cells for transportation or as a source of energy for industrial processes.

Hydrogen can be produced through a variety of methods, including:
1. Steam methane reforming (SMR) - This process involves reacting methane (natural gas) with steam to produce carbon dioxide and hydrogen.
2. Electrolysis of water - This process involves using an electric current to split water molecules into hydrogen and oxygen.
3. Biomass gasification - This process involves heating biomass (such as wood or agricultural waste) in the absence of oxygen to produce a gas mixture containing hydrogen.
4. Coal gasification - Like biomass gasification, this process involves heating coal in the absence of oxygen to produce a gas mixture containing hydrogen.
5. Photoelectrochemical water splitting - This process utilizes the energy from sunlight to split water into hydrogen and oxygen.
6. Thermochemical water splitting - This process utilizes heat and a chemical reaction to split water into hydrogen and oxygen.

It's worth noting that most of the hydrogen produced today is obtained through Steam Methane Reforming, which is the most common and cost-effective method.

Electric cars can work with hydrogen in a process called "hydrogen fuel cell electric vehicles" (FCEVs). In a FCEV, hydrogen is stored in a fuel tank and then sent to a fuel cell stack, where it reacts with oxygen from the air to produce electricity. fuel cell stack is powered by a chemical reaction between hydrogen and oxygen. The basic process involves the following steps:
- Hydrogen fuel is delivered to the anode side of the fuel cell stack, where it is ionized and split into protons and electrons.
- The protons can pass through a proton exchange membrane (PEM), while the electrons are forced to flow through an external circuit, creating an electric current.
- On the cathode side of the fuel cell stack, oxygen from the air reacts with the protons and electrons, forming water and heat as by-products.
- The electric current generated by the flow of electrons can be used to power an electric motor, which propels the vehicle.
- The by-product water is released as vapor, which can be condensed and collected as a source of drinking water.

It is important to mention that while the process is relatively simple, the fuel cell stack itself is a complex system composed of many individual cells, each of which contains electrodes, a PEM, and other components. Additionally, the Fuel Cell stack needs to be cooled and have a proper management of the humidification of the PEM. Nevertheless, this electricity may be used to power an electric motor, which propels the vehicle. The main advantage of FCEVs is that they have a much longer driving range compared to battery electric vehicles (BEVs) and can be refuelled in a similar amount of time to gasoline-powered vehicles.

A fuel cell is loaded by supplying it with hydrogen fuel and oxygen (usually from the air). The process typically involves connecting the fuel cell to a hydrogen fuel source, such as a storage tank or pipeline and then opening valves or turning on pumps to allow hydrogen to flow into the fuel cell. Supplying oxygen to the cathode side of the fuel cell, usually from the air whilst monitoring the fuel cell's performance and adjusting as necessary to maintain optimal operating conditions. It's important to make sure that the fuel cell is properly loaded with hydrogen and oxygen, and that the fuel is pure, without any impurities that could damage the cell. Also, it's necessary to keep the temperature, pressure, and humidity at the right levels to prevent damage to the fuel cell and to get the best performance.

It's also worth noting that loading a fuel cell also implies to properly manage the by-products of the reaction, such as heat and water, to avoid damage to the cell and to make sure it's working efficiently.

However, it is worth noting that hydrogen fuel cell technology is still relatively new, and the infrastructure for distributing hydrogen fuel is not yet as developed as the infrastructure for gasoline or electricity. Additionally, hydrogen production currently mainly relies on fossil fuels, which raises questions about the environmental impact.

Hydrogen production and delivery refers to the process of creating hydrogen fuel and getting it to where it is needed. There are several ways to produce hydrogen, including steam methane reforming, electrolysis, and biomass gasification.

Once hydrogen is produced, it needs to be stored and transported to where it is needed. This typically involves compressing or liquefying the hydrogen, and then storing it in tanks or trailers for transport.

Delivery can be done by truck, rail, or pipeline, depending on the location and quantity of hydrogen needed. It's also worth noting that hydrogen can be produced on-site, making use of local resources such as water and renewable energy sources, and avoiding the need for transportation.

When the hydrogen arrives at the destination, it needs to be dispensed or distributed to the end user. This can involve installing hydrogen fuelling stations or developing systems for on-site hydrogen generation and storage.

It's important to note that the delivery and distribution of hydrogen requires a welldeveloped infrastructure, and it's a complex and expensive process. Additionally, the production of hydrogen currently mainly relies on fossil fuels, which raises questions about the environmental impact.

In this sense, US20110053016A1 discloses a method of generating and delivering on-demand power to the consumer in a low-carbon-emitting manner comprises the steps of: generating energy from a low-carbon-emitting source, using the generated energy to generate a hydrogen storage composition, transporting the hydrogen storage composition and a reagent to the consumer, facilitating the use of the hydrogen storage composition to generate electricity, and facilitating the return of the by-products to a regeneration facility. This method is preferably used to distribute an on-demand power source to the consumer. One potential advantage of the distribution method disclosed includes low carbon emissions. By leveraging low-emission energy sources, utilizing low-emission distribution channels, and placing the energy source (H2) and energy generation (conversion of H2 to electricity) in the consumer's hands, unexpected savings in environmental impact, as measured by carbon emission, can be achieved.

### DESCRIPTION OF THE INVENTION

It is therefore an object of the invention to provide an energy network that obviates or mitigates at least one of the disadvantages of the above-identified prior art.

Hence, it is provided system according to the claims below.

### BRIEF DESCRIPTION OF THE DRAWINGS

Embodiments of the present invention will now be explained, by way of example only, with reference to the attached figures in which:

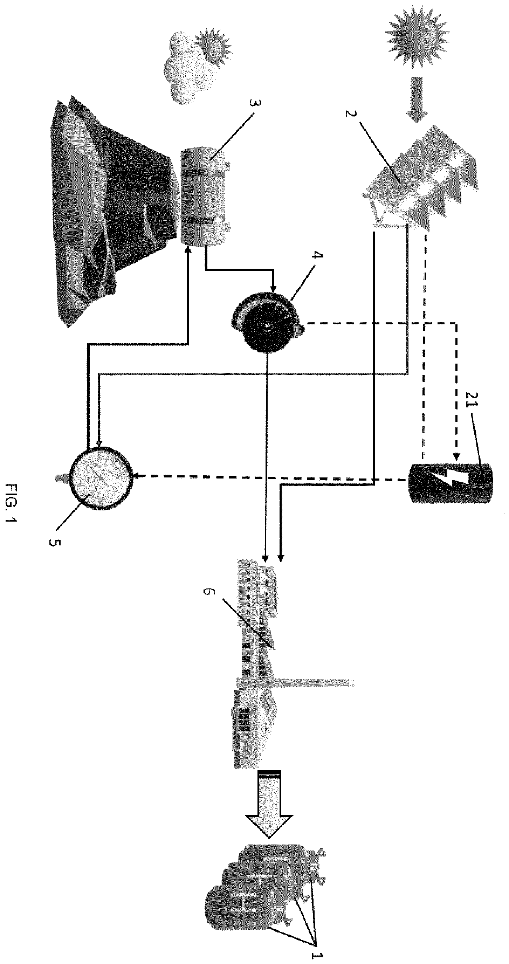

- Figure 1 is a schematic representation of an embodiment of the present invention.

### DETAILED DESCRIPTION OF THE INVENTION

In a first aspect of the object of the invention depicted in figure 1, it is hereby disclosed a system for producing hydrogen (1), said system is commanded by a processing module (not represented in figures) associated to: at least one flow turbine (4) for producing electricity from a gravimetric pile (3), and to at least one renewable source of electricity (2) such as solar power or and wind power, at least one flow pump (5) -that can be powered by the renewable source of electricity (2)- and configured to feed the gravimetric pile (3), and a hydrogen generation module (6) powered by at least one of: the flow turbine (4) and the renewable source or electricity (2).

The processing module may receive data from a set of sensing means (not shown in figures) connected to at least one of: the renewable source of electricity (2), the gravimetric pile (3), and the flow pump (5), said sensing means are configured to determine the presence of solar light and command the power feed for the hydrogen generation module (6) where Hydrogen (1) is produced from the flow turbine (4) and the renewal source or electricity.

The hydrogen (1) produced by the hydrogen generation module (6) is stored in produced at least one fuel cell; said fuel cell may be re-used to feed the pump (5) or the turbine (4) or even substitute the renewable source of electricity (2) so the hydrogen (1) production process is sustained when the sensing means determine the fuel cell capacity to be above a threshold level required to feed any of the above elements.

This is closely related to a second aspect of the object of the invention where a method for producing hydrogen (1) is disclosed; electricity may be produced from either the renewable source of electricity (2) or the gravimetric pile (3) to power the flow pump (5) and/or the hydrogen generation module (6).

When producing hydrogen (1) taking energy from the renewable source of electricity (2), said renewable source of electricity (2) may be solar power and the sensing means determine the presence of sunlight, so the process of generating hydrogen (1) is at least partially powered by means of the renewable source of electricity (2) when the sensing means determine a level of sun irradiation above a certain threshold value or the energy may be generated at least partially from the gravimetric pile (3) when the sensing means determine the sun irradiation below said threshold value. In alternative embodiments of the invention both the renewable source of electricity (2) and the gravimetric pile (3) may power the hydrogen generation module (6).

In an alternative embodiment of the invention, it is provided a rechargeable source of energy (21) fed by at least one of: the renewable source of electricity (2) and the turbine (4) configured to feed any element of the system requiring electricity as energy i.e. the flow pump (5). Said rechargeable source of energy (21) may be also connected to the hydrogen generation module (6) to feed said hydrogen generation module (6) to produce hydrogen (1).

In a yet alternative embodiment of the invention the rechargeable source of energy (21) is hydrogen (1) that can be produced by the very same system of the invention.

## Claims

1. A system for producing hydrogen (1), the system comprising connected to a processing module:
a. at least one flow turbine (4) for producing electricity from a gravimetric pile (3),
b. at least one renewable source of electricity (2),
c. at least one flow pump (5) powered by the renewable source of electricity (2) and configured to feed the gravimetric pile (3), and
d. a hydrogen generation module (6) powered by at least one of: the flow turbine (4) and the renewal source or electricity,
e. a set of sensing means connected to the renewable source of electricity (2), the gravimetric pile (3), and the flow pump (5), said sensors being configured to determine the presence of solar light and command the power feed for the hydrogen generation module (6) from the flow turbine (4) and the renewal source or electricity,
f. at least one fuel cell for storing the hydrogen (1) produced by the hydrogen generation module (6).

2. The system for producing hydrogen (1) of claim 1, further comprising a capacity sensor configured to determine the capacity of the gravimetric pile (3) so that the flow pump (5) stops feeding the gravimetric pile (3) when a threshold volume level is reached.

3. The system for producing hydrogen (1) of claim 1 or 2, wherein the renewable source of electricity (2) is selected from the group consisting of: solar power, and wind power.

4. The system for producing hydrogen (1) of any one of the preceding claims, further comprising a rechargeable source of energy (21) fed by at least one of:
the renewable source of electricity (2) and the turbine (4).

5. The system for producing hydrogen (1) of claim 4 wherein the rechargeable source of energy (21) is connected to the hydrogen generation module (6) so that energy is provided to said hydrogen generation module (6) for producing hydrogen (1).

6. The system for producing hydrogen (1) of any one of claims 4 or 5, wherein the rechargeable source of energy (21) is hydrogen (1).

7. A method for producing hydrogen (1) using the system for producing hydrogen (1) of any one of the preceding claims, the method comprising:
a. generating electricity from either the renewable source of electricity (2) or the gravimetric pile (3),
b. powering the flow pump (5),
c. generating energy from the renewable source of electricity (2) when the renewable source of electricity (2) is solar power and the sensing means determine the presence of sunlight, and
d. generating energy from the gravimetric pile (3) when the sensing means determine the presence of sunlight,
